# EUROPEAN PATENT APPLICATION

(11) **EP 4 773 275 A1**
(43) Date of publication of application: **08.07.2026**
(21) Application number: 25827133.7
(22) Date of filing: 16.01.2025
(51) Int. Cl.: H01M 10/04, H01M 50/533, G01B 11/26

(54) **METHOD FOR MONITORING BENDING POSITION OF ELECTRODE TAB AND ELECTRODE ASSEMBLY WINDING DEVICE USING SAME**

(30) Priority: 27.06.2024 KR 20240084453
(71) Applicant: LG Energy Solution, Ltd., Seoul 07335 (KR)
(72) Inventor: KO, Hongjae, Daejeon 34122 (KR); YU, Jongseon, Daejeon 34122 (KR); KIM, Tae Young, Daejeon 34122 (KR)
(74) Representative: Goddar, Heinz J.
(86) International application number: PCT/KR2025/000947
(87) International publication number: WO 2026/005168

(57) **Abstract**

A method for monitoring a bending position of a preliminarily bent electrode tab in real time prior to winding an electrode assembly is provided. The monitored target is the position where the electrode tab is bent. The method includes (a) acquiring an image using a camera having a shooting direction substantially perpendicular to a plane including the electrode by detecting light irradiated in a direction substantially parallel to the shooting direction and reflected from a bent portion of the non-coated area; and (b) measuring a distance between an incision groove and the bending line in widthwise direction from the image acquired by the image acquisition device, wherein the incision groove is an inner end of the incision.

## Description

### [TECHNICAL FIELD]

This application claims the benefit of priority based on Korean Patent Application No. 10-2024-0084453 filed on June 27, 2024, entire content disclosed in the document of the patent applications is included as a part of this specification.

The present invention relates to a method of monitoring a bending position of an electrode tab, and more specifically, to a method of monitoring a bending position of a preliminarily bent electrode tab in real time prior to winding of an electrode assembly, and to an electrode assembly winding apparatus capable of correcting a bending process of an electrode tab in real time by applying the method.

### [BACKGROUND ART]

As electric vehicles become more widespread, the capacity of cylindrical battery cells manufactured using cylindrical battery cans as housings is increasing. It is desirable for battery cells mounted on vehicles to have high energy density to secure space in the vehicle and to reduce weight to increase driving efficiency. Accordingly, designs are aimed at increasing energy density by manufacturing cylindrical battery cells larger and filling the inner space of the battery cell with electrode assemblies as much as possible.

As part of such design, the non-coated areas of the first electrode and the second electrode protrude from the first and second ends of the jelly-roll type electrode assembly, respectively, and the non-coated area is bent in the radial direction to form the electrode tab.

However, since the non-coated area is a collector portion in the form of a thin metal foil, the electrode tab is unintentionally deformed while processing the non-coated area to form the electrode tab. Such deformation of the electrode tab causes product defects and performance degradation.

### [DISCLOSURE]

### [TECHNICAL PROBLEM]

In order to solve the above-described problems, it is an object of the present invention to provide a method of monitoring whether a non-coated area of an electrode assembly is bent at a designed position.

It is an object of the present invention to provide a method of monitoring a bending position of a non-coated area in real time during a manufacturing process of an electrode assembly, and an electrode assembly winding apparatus using the same.

It is an object of the present invention to provide a monitoring method of correcting a bending position of an electrode tab in real time in order to prevent the bending position of a non-coated area from deviating from a designed position, and an electrode assembly winding apparatus using the same.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problem, the present invention may be applied to an electrode assembly winding apparatus that assembles a jelly-roll type electrode assembly by winding a first electrode and a second electrode with a separator interposed therebetween.

The electrode may include a collector of a metal foil with an active material coated thereon. The electrode may include a coated area which is a portion of the surface of the collector where the active material is coated, and a non-coated area which is a portion of the surface of the collector where the active material is not coated.

The electrode may have a predetermined width and extend in the lengthwise direction.

The non-coated area of the electrode may be arranged at the first widthwise end thereof.

In the non-coated area, a plurality of incisions extending inward in the widthwise direction from the outer widthwise end are arranged to be spaced apart along the lengthwise direction of the electrode. The portion of the non-coated area between two adjacent incisions in the lengthwise direction constitutes an electrode tab. That is, the plurality of the incisions define a plurality of the electrode tabs arranged along the lengthwise direction.

The electrode tab may be arranged spaced apart from and outer than an incision groove defined by an inner widthwise end of the incision by a predetermined distance in the widthwise direction, and may be bent in a bending direction intersecting both the widthwise direction and the lengthwise direction of the electrode along a bending line parallel to the lengthwise direction of the electrode.

The bending may be a preliminary bending performed before winding the electrode.

As described above, after the first electrode and second electrode with the electrode tab preliminarily bent, and a separator interposed therebetween is wound to form a jelly-roll type electrode assembly, the electrode tab preliminarily bent may be finally bent.

The electrode assembly winding apparatus includes a forming unit that preliminary bends the electrode tab with respect to the bending line.

The forming unit may be provided with a first roller and a second roller in contact with two sides of the electrode and drive the electrode in the lengthwise direction.

A pressure roller that applies pressure to the electrode tab in the bending direction may be provided at the first axial end of the first roller.

A support roller that restricts the bending angle of the electrode tab preliminary bent by the pressure roller may be provided at the second axial end of the second roller.

The electrode tab of the electrode may be preliminary bent while passed through the forming unit.

The electrode assembly winding apparatus includes a distance measuring unit measuring a distance between an incision groove and the bending line in widthwise direction of the electrode.

The electrode assembly winding apparatus includes a winding unit winding the electrode with a bent electrode tab to form an electrode assembly.

The distance measuring unit may be arranged between the forming unit and the winding unit.

The electrode assembly winding apparatus may include a controller monitoring whether the distance measured by the distance measuring unit deviates from a reference value.

The distance measuring unit may include an image acquisition device acquiring an image including a bent portion of the non-coated area formed by the forming unit.

The image acquisition device may include a camera photographing the bent portion of the non-coated area and a lighting irradiating light to the bent portion of the non-coated area.

The light may include a coaxial lighting unit irradiating light to the bent portion of the non-coated area in a direction substantially parallel to the shooting direction.

The shooting direction of the camera may be substantially perpendicular to a plane including the electrode. The camera may be disposed above a surface of the bent portion of the non-coated area.

The coaxial lighting unit may include a mirror arranged in the line of shooting of the camera. The mirror may be arranged between the surface of the bent portion of the non-coated area and the camera disposed above the surface of the bent portion of the non-coated area.

The coaxial lighting unit may have a light emitting unit irradiating light to the mirror in a direction intersecting the shooting direction. The light emitting unit may be arranged laterally spaced apart from the line of shooting.

Among the light irradiated by the coaxial lighting unit and reflected by the non-coated area, the reflected light substantially parallel to the shooting direction may be incident on the camera. The camera may detect such incident light and acquire the image.

Among light irradiated on the non-coated area, the light irradiated on the non-bent surface of the non-coated area may be reflected and incident on the camera. Among light irradiated on the non-coated area, the light irradiated on the bent surface of the non-coated area may be reflected in a different direction intersecting the shooting direction and may not be incident on the camera.

The reflected light may be transmitted through the mirror and incident on the camera.

The distance measuring unit may include a distance calculating device calculating a distance between the incision groove and the bending line from the image acquired by the image acquisition device.

The distance calculating device may recognize positions of the incision groove and the bending line from a difference in contrast ratio distinguished by the incident light in the image acquired by the camera, and calculate the distance between the positions of the incision groove and the bending line.

The controller may calculate an average value of a predetermined number of calculated distances, and determine whether the average value deviates from the reference value.

The controller may adjust a widthwise position of the forming unit to correct the average value determined to be deviating from the reference value.

The present invention provides a method of monitoring a bending position of an electrode tab.

The method includes a step of detecting a light irradiated in a direction substantially parallel to a shooting direction reflected from a bent portion of a non-coated area using a camera arranged in a manner that a shooting direction thereof is substantially perpendicular to a plane including an electrode to acquire an image.

The method includes a step of measuring a distance between an incision groove and the bending line from the image acquired by the image acquisition device.

In the image acquisition step, the light is irradiated to a mirror disposed in a line of shooting of the camera in a direction intersecting the shooting direction, and the light reflected by the mirror is projected in parallel with the shooting direction onto the non-coated area.

In the image acquisition step, among the light irradiated onto and reflected by the non-coated area, the reflected light substantially parallel to the shooting direction may be transmitted through the mirror and incident on the camera.

The measurement step may include recognizing positions of the incision groove and the bending line from a difference in contrast ratio distinguished by light reflected from a surface of the non-coated area and incident on the camera in the image acquired by the camera, and calculating the distance between the positions of the incision groove and the bending line.

The method may further include calculating an average value of a predetermined number of calculated distances, determining whether the average value deviates from the reference value, and adjusting a widthwise position of the forming unit to correct the average value determined to be deviating from the reference value.

### [ADVANTAGEOUS EFFECTS]

According to the method of monitoring a bending position of an electrode tab according to the present invention, it is possible to monitor in real time whether a preliminary bending of an electrode tab is performed at a designed position before assembling an electrode assembly, and based on this, it is possible to correct the bending position of the electrode tab in real time such that the bending position does not deviate from the designed position.

An electrode assembly winding apparatus according to the present invention may monitor and correct a bending position of an electrode tab in real time. Accordingly, it is possible to reduce defects occurring in the assembly process of the electrode assembly.

In addition to the advantageous effects described above, specific effects of the present invention will be described further while describing specific details of the present invention.

### [BRIEF DESCRIPTION OF DRAWINGS]

FIG. 1 is an exploded perspective view of electrodes and separators constituting an electrode assembly.
FIG. 2 is a perspective view schematically illustrating a process of preliminarily bending an electrode tab while transporting an electrode to a forming unit.
FIG. 3 is a perspective view schematically illustrating a process of stacking and winding a first electrode and a second electrode with a preliminarily bent electrode tab and a separator interposed therebetween.
FIG. 4 is a perspective view illustrating an electrode assembly wound by the winding process of FIG. 3 with the bent electrode tab.
FIG. 5 is a side view of a forming unit performing preliminary bending of an electrode tab while transporting an electrode, and a controller connected to the forming unit.
FIG. 6 is a perspective view illustrating an image acquisition device arranged between the forming unit of FIG. 2 and the winding unit of FIG. 3 for photographing an electrode tab bent by preliminary bending.
FIG. 7 is a perspective view illustrating an image acquisition device including an image acquisition device and a distance calculating device of FIG. 6, and a controller connected thereto.
FIG. 8 is an enlarged view illustrating light irradiated to and reflected by a non-coated area including the electrode tab bent by preliminary bending.
FIG. 9 is an image acquired by the image acquisition device of FIG. 6.
FIG. 10 is the image of FIG. 9 with the calculated distance between a recognized incision groove and a recognized bending line.

### [DESCRIPTION OF REFERENCE NUMERALS]

10: an electrode assembly winding apparatus 20: electrode assembly 21: first electrode 22: second electrode 23: collector 24: active material 25: coated area 26: non-coated area 27: electrode tab 28: separator 29: core hollow portion 30: incision 32: incision groove 34: bending line 35: bent portion 36: non-bent portion 40: forming unit 41: first roller 411: pressure roller 42: second roller 422: support roller 50: distance measuring unit 51: image acquisition device 52: camera 53: coaxial lighting unit 531: light emitting unit 532: mirror 55: distance calculating device 60: controller 70: winding unit

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

In the description of the embodiments, "axial direction" refers to "a direction in which the axis constituting the winding center of the jelly-roll type electrode assembly extends", and "radial direction" refers to "a direction toward or away from the axis," and "circumferential direction" refers to "a direction surrounding the axis." The axial direction corresponds to the widthwise direction of the electrode, and the circumferential direction corresponds to the lengthwise direction of the electrode.

Hereinafter, a preferred embodiment of the present invention will be described.

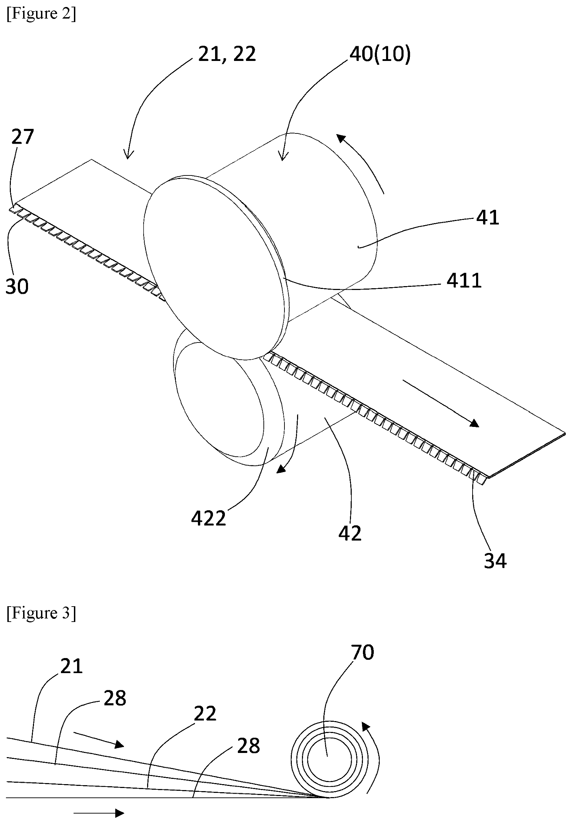

Referring to FIGS. 2, 3 and 5 to 7, an electrode assembly winding apparatus according to an embodiment includes: a forming unit 40 transporting a first electrode 21 and a second electrode 22 and preliminarily bending electrode tabs 27; a winding unit 70 winding the first electrode 21 and the second electrode 22 with the electrode tabs 27 preliminarily bent and a separator 28 interposed therebetween; a distance measuring unit 50 disposed between the forming unit 40 and the winding unit 70 and measuring a bending position of a bent portion of the electrode tab 27; and a controller 60 controlling the forming unit 40 based on the bending position of the electrode tab 27 measured by the distance measuring unit 50 to correct the bending position.

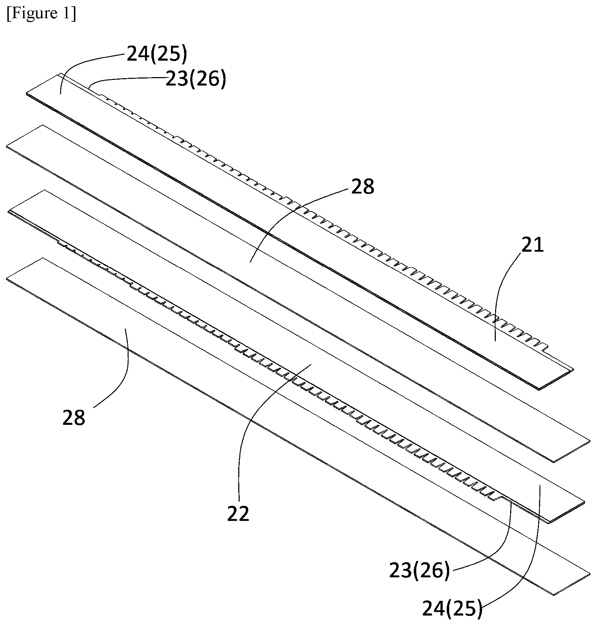

Referring to FIG. 1, each of the electrodes 21 and 22 includes a collector 23 of a metal foil with an active material 24 coated thereon. The electrodes 21 and 22 include a coated area 25 which is a portion of the surface of the collector 23 where the active material 24 is coated, and a non-coated area 26 which is a portion of the surface of the collector 23 where the active material 24 is not coated. Each of the electrodes 21 and 22 has a predetermined width and extend in the lengthwise direction. The non-coated area 26 of the first electrode 21 is arranged at the first widthwise end thereof, and the non-coated area 26 of the second electrode 22 is arranged at the second widthwise end thereof.

Referring to FIGS. 1 and 2, in the non-coated area 26, a plurality of incisions 30 formed by a laser notching process extending inward in the widthwise direction from the outer widthwise end are arranged to be spaced apart along the lengthwise direction of the electrodes 21 and 22. The portion of the non-coated area 26 between two adjacent incisions 30 in the lengthwise direction constitutes an electrode tab 27. That is, the plurality of the incisions 30 define a plurality of the electrode tabs 27 arranged along the lengthwise direction. In this way, the electrode tabs 27 in the shape of a flag may be formed by forming notches at a predetermined interval in the non-coated area 26.

In the embodiment, the electrode tabs 27 having a shape of an isosceles trapezoid are exemplified. However, the shape thereof may be various such as a semicircle, a semi-ellipse, a triangle, a rectangle, a parallelogram, etc.

In addition, in the embodiment, the electrode tabs 27 having the same width and arranged along the lengthwise direction are exemplified. However, the width of the electrode tabs may widen gradually or widen in steps from the center toward the outer circumference.

In addition, in the embodiment, the electrode tabs 27 having a height gradually increasing from the center toward the outer circumference are exemplified. However, the height of the electrode tabs may be a constant or gradually decrease.

In addition, in the embodiment, predetermined sections of the centripetal end and the centrifugal end of the non-coated area 26 without the electrode tabs 27 are exemplified. However, apparently, the centripetal end of the non-coated area may be provided with the electrode tabs, the centrifugal end of the non-coated area may be provided with the electrode tabs or both the centripetal end and the centrifugal end of the non-coated area may be provided with the electrode tabs.

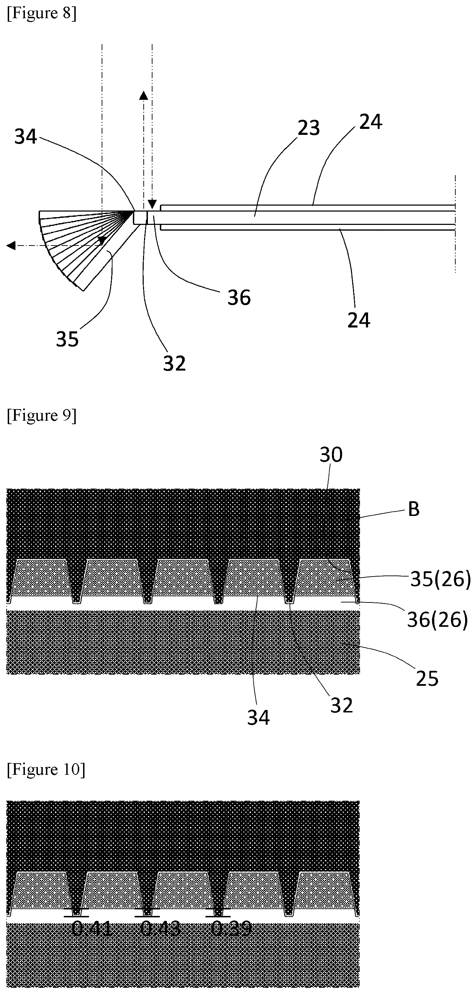

Referring to FIGS. 2 and 8, before winding the electrodes 21 and 22, the electrode tab 27 is arranged outer than the incision groove 32 defined by the inner widthwise end of the incision 30 in widthwise direction by a first distance, and is preliminarily bent in a bending direction intersecting both the widthwise direction and the lengthwise direction of the electrodes 21 and 22 along a bending line 34 parallel to the lengthwise direction of the electrodes 21 and 22. The incision groove 32 is arranged outer than the boundary portion of the non-coated area 26 and the coated area 25 in widthwise direction by a second distance regardless of the height of the electrode tabs, and the preliminary bending may be arranged outer than the incision groove 32 in widthwise direction by a first distance regardless of the height of the electrode tabs.

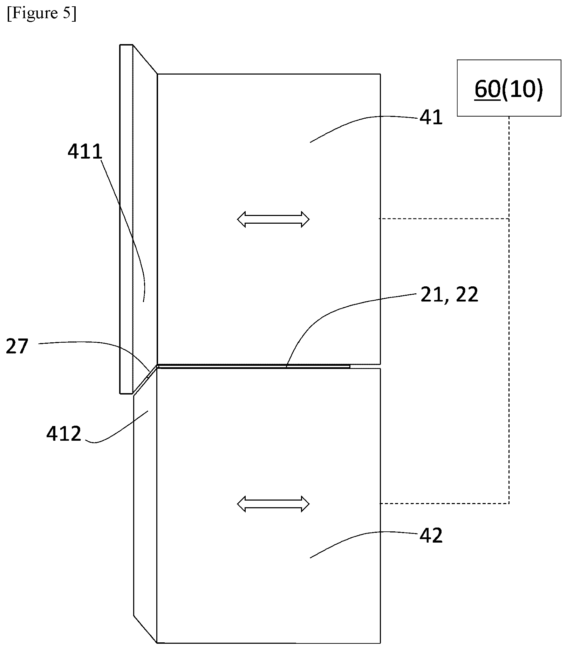

Referring to FIG. 2 and FIG. 5, the forming unit 40 performs preliminary bending of the electrode tab 27 along the bending line 34. The forming unit 40 includes a first roller 41 and a second roller 42 in contact with two sides of the electrodes 21 and 22, respectively, and cause the electrodes 21 and 22 to travel in the lengthwise direction. A pressure roller 411 which presses the electrode tab 27 in the bending direction and a support roller 422 which limits the bending angle of the electrode tab 27 preliminarily bent by the pressure roller 411 are respectively provided at the axial ends of the first roller 41 and the second roller 42 where the non-coated area 26 of the electrodes 21 and 22 is provided. The electrode tabs 27 of the electrodes 21 and 22 pass through the forming unit and are preliminarily bent by the pressure roller 411 and the support roller 422.

As shown in FIG. 5, in order to control the position of the bending line 34, the controller 60 can adjust the widthwise positions of the first roller 41 and the second roller 42.

As described above, the electrode tabs 27 are preliminarily bent. The first electrode 21 and the second electrode 22 are wound in the lengthwise direction with the winding unit 70 with a separator 28 interposed therebetween as shown in FIG. 3. Accordingly, a jelly-roll type electrode assembly 20 is manufactured.

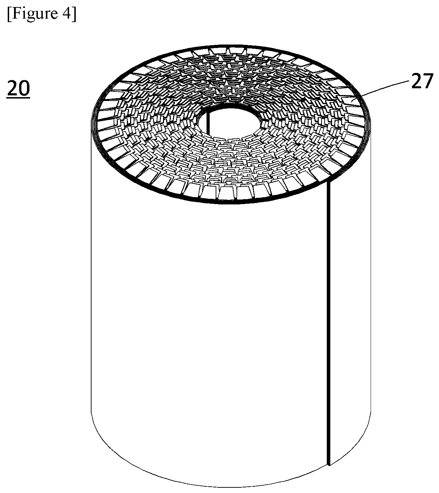

As shown in FIG. 4, the preliminarily bent electrode tabs 27 are finally bent to form the wound electrode assembly 20 with a flat surface of the electrode tabs 27 substantially perpendicular to the axial direction of the electrode assembly.

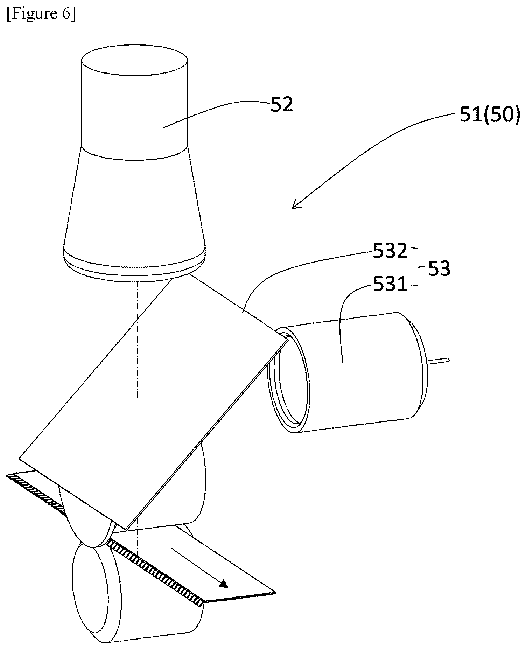

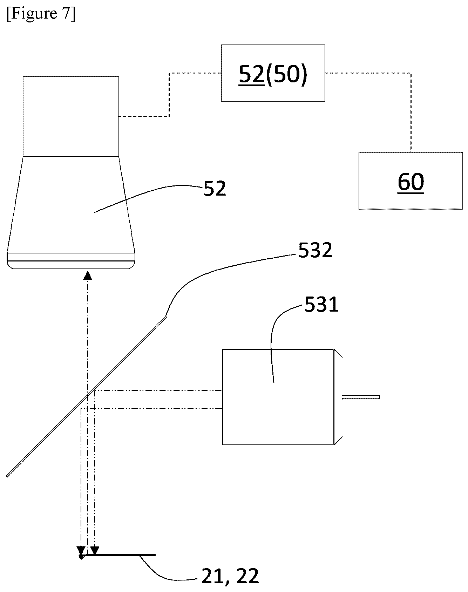

Referring to FIGS. 6 and 7, the distance measuring unit 50 is disposed between the forming unit 40 and the winding unit 70, and measures the distance between the incision groove 32 and the bending line 34 of the preliminarily bent electrode tabs 27 in the widthwise direction of the electrodes 21 and 22.

The distance measuring unit 50 includes an image acquisition device 51 that acquires an image including a portion of the non-coated area 26 bent by the forming unit, and a distance calculating device 55 that calculates a distance between the incision groove 32 and the bending line 34 from the image acquired by the image acquisition device 51.

The image acquisition device 51 includes a camera 52 that photographs the bent portion of the non-coated area 26, and a coaxial lighting unit 53 that irradiates light to the portion of the non-coated area 26 bent substantially parallel to the shooting direction.

The shooting direction of the camera 52 is substantially perpendicular to a plane including the electrodes 21 and 22. For this purpose, the camera 52 is disposed to be spaced apart from the surface of the bent portion of the non-coated area 26.

The coaxial lighting unit 53 includes a mirror 532 arranged in the line of shooting of the camera 52 and a light emitting unit 531 irradiating light to the mirror 532. The mirror 532 is arranged between the surface of the bent portion of the non-coated area 26 and the camera 52 above the surface of the bent portion of the non-coated area 26. The light emitting unit 531 is arranged to be laterally spaced apart from the line of shooting and emits light to the mirror 532 in a direction intersecting the shooting direction, more specifically, substantially perpendicular to the shooting direction.

As shown in FIGS. 7 and 8, the light irradiated to the non-bent portion 35 of the non-coated area 26 is reflected vertically and incident on the camera 52. Contrarily, the light irradiated to the bent portion 35 of the non-coated area 26 is reflected in a different direction intersecting the shooting direction and is not incident on the camera 52.

Among the light irradiated by the coaxial lighting unit 53 and reflected by the non-coated area 26, the reflected light substantially parallel to the shooting direction is incident on the camera 52. The reflected light passes through the mirror 532 and is incident on the camera 52. The camera 52 detects the incident light in this way and acquires the image.

As shown in FIG. 9, the non-bent portion 35 and the bent portion 35 of the non-coated area 26 are expressed as bright and dark in the image acquired, respectively. Apparently, the coated area 25 and the background B are also expressed sufficiently dark to be distinguished from the bent portion 35 of the non-coated area 26.

The distance calculating device 55 recognizes the position of the incision groove 32 and the position of the bending line 34 from the difference in contrast ratio distinguished by the incident light in the image acquired by the camera 52 as shown in FIG. 10, and calculates the distance between the recognized positions of the incision groove 32 and the bending line 34.

The controller 60 monitors whether the distance measured by the distance measuring unit 50 deviates from a predetermined reference value. The controller 60 calculates an average value of a predetermined number of distances and determines whether the average value deviates from the reference value. While the distances may differ individually, it is not necessary to control the widthwise position of the forming unit 40 when the average value is constant. However, when the average value gradually moves away from the reference value, it is necessary to adjust the position of the forming unit 40. When the controller 60 determines that the average value deviated from the reference value, the controller 60 adjusts the widthwise position of the forming unit as shown in FIG. 5 to correct the error. The monitoring and correction of the bending position may be performed in real time on the production line.

Hereinafter, a method of monitoring the bending position of the electrode tab 27 will be described.

First, a light irradiated in a direction substantially parallel to a shooting direction reflected from a bent portion of a non-coated area 26 is detected using a camera 52 arranged in a manner that a shooting direction thereof is substantially perpendicular to a plane including electrodes 21 and 22 to acquire an image.

Here, the light is irradiated to the mirror 532 disposed in the line of shooting of the camera 52 in a direction intersecting the shooting direction, and the light reflected by the mirror 532 is projected in parallel with the shooting direction onto the non-coated area 26. Then, among the light irradiated onto and reflected by the non-coated area 26, the reflected light substantially parallel to the shooting direction from the non-bent portion 35 of the non-coated area 26 may be transmitted through the mirror 532 and incident on the camera 52.

Thereafter, a distance between an incision groove 32 and the bending line 34 is measured from the image acquired by the image acquisition device 51. Specifically, positions of the incision groove 32 and the bending line 34 are recognized and displayed from a difference in contrast ratio distinguished by light reflected from a surface of the non-coated area 26 and incident on the camera 52 in the image, and the distance between the positions of the incision groove 32 and the bending line 34 is calculated.

Thereafter, an average value of a predetermined number of distances calculated above is calculated, and whether the average value deviates from the reference value is determined. When the average value is determined to deviate from the reference value, a widthwise position of the forming unit is adjusted to correct the bending position.

According to the embodiment, the preliminary bending of the electrode tab 27 may be inspected in-line to enable overall quality control of the electrode assembly, and the possibility of an internal short circuit occurring due to the electrode tab 27 being deformed in an unintended direction may be significantly reduced. The image acquisition is performed by photographing the preliminarily bent position while the electrodes 21 and 22 is traveling and passing the forming unit 40 such that there is no delay in production time.

In addition, since in-line full inspection and automatic correction of the equipment is possible, it is not necessary to stop the operation of the equipment for equipment correction.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. An electrode assembly winding apparatus comprising:
a forming unit bending a plurality of electrode tabs in a direction intersecting both widthwise direction and lengthwise direction along a predetermined bending line on the plurality of electrode tabs, wherein the plurality of electrode tabs are defined by a plurality of incisions arranged in the lengthwise direction of an electrode having a predetermined width and extending in the lengthwise direction, the plurality of incisions spaced apart from each other in the lengthwise direction and extending inward in the widthwise direction from an outer widthwise end of a non-coated area provided at a first widthwise end of the electrode;
a winding unit winding the electrode with a bent electrode tab to form an electrode assembly;
a distance measuring unit arranged between the forming unit and the winding unit to measure a distance between an incision groove and the bending line in the widthwise direction, wherein the incision groove is an inner end of the incision; and
a controller monitoring whether the distance measured by the distance measuring unit deviates from a reference value.

2. The electrode assembly winding apparatus of claim 1, wherein the distance measuring unit comprises:
an image acquisition device acquiring an image including a bent portion of the non-coated area formed by the forming unit; and
a distance calculating device calculating a distance between the incision groove and the bending line from the image acquired by the image acquisition device.

3. The electrode assembly winding apparatus of claim 2, wherein the image acquisition device comprises:
a camera photographing the bent portion of the non-coated area with a shooting direction thereof substantially perpendicular to a plane including the electrode; and
a coaxial lighting unit irradiating light to the bent portion of the non-coated area in a direction substantially parallel to the shooting direction.

4. The electrode assembly winding apparatus of claim 3, wherein the coaxial lighting unit comprises:
a light emitting unit irradiating light toward a line of shooting of the camera in a direction intersecting the shooting direction; and
a mirror arranged in the line of shooting of the camera and reflecting light irradiated from the coaxial lighting unit to the non-coated area for image acquisition.

5. The electrode assembly winding apparatus of claim 4, wherein the camera detects the light irradiated from the coaxial lighting unit and reflected from the non-coated area and transmitted through the mirror to acquire an image.

6. The electrode assembly winding apparatus of claim 3, wherein the distance calculating device recognizes positions of the incision groove and the bending line from a difference in contrast ratio distinguished by light reflected from a surface of the non-coated area and incident on the camera in the image acquired by the camera, and calculates the distance between the positions of the incision groove and the bending line.

7. The electrode assembly winding apparatus of claim 6, wherein the controller calculates an average value of a predetermined number of calculated distances, determines whether the average value deviates from the reference value, and adjusts a widthwise position of the forming unit to correct the average value determined to be deviating from the reference value when it is determined that the average value deviates from the reference value.

8. A method of monitoring a bending position of a plurality of electrode tabs bent in a direction intersecting both widthwise direction and lengthwise direction along a predetermined bending line on the plurality of electrode tabs, wherein the plurality of electrode tabs are defined by a plurality of incisions arranged in the lengthwise direction of an electrode having a predetermined width and extending in the lengthwise direction, the plurality of incisions spaced apart from each other in the lengthwise direction and extending inward in the widthwise direction from an outer widthwise end of a non-coated area provided at a first widthwise end of the electrode, the method comprising:
image acquiring step of acquiring an image using a camera having a shooting direction substantially perpendicular to a plane including the electrode by detecting light irradiated in a direction substantially parallel to the shooting direction and reflected from a bent portion of the non-coated area; and
measuring step of measuring a distance between an incision groove and the bending line in widthwise direction from the image acquired by the image acquisition device, wherein the incision groove is an inner end of the incision.

9. The method of claim 8, wherein the light is irradiated to a mirror disposed in a line of shooting of the camera in a direction intersecting the shooting direction, and the light reflected by the mirror is projected in parallel with the shooting direction onto the non-coated area in the image acquiring step.

10. The method of claim 9, wherein the light reflected by the mirror and projected onto the non-coated area is transmitted through the mirror and is incident onto the camera in the image acquiring step.

11. The method of claim 8, wherein positions of the incision groove and the bending line is recognized from a difference in contrast ratio distinguished by light reflected from a surface of the non-coated area and incident on the camera in the image acquired by the camera, and the distance between the positions of the incision groove and the bending line is calculated in the measuring step.

12. The method of claim 8, wherein an average value of a predetermined number of calculated distances is calculated, whether the average value deviates from a reference value is determined, and a widthwise position of a forming unit is adjusted to correct the average value determined to be deviating from the reference value when it is determined that the average value deviates from the reference value.
